(19) **Europäisches Patentamt / European Patent Office / Office européen des brevets**

(11) **EP 3 460 006 B1**

(12) **EUROPEAN PATENT SPECIFICATION**

(45) Date of publication and mention
of the grant of the patent:
**14.10.2020 Bulletin 2020/42**

(21) Application number: **17819958.4**

(22) Date of filing: **20.06.2017**

(51) Int Cl.:
*C09B 67/20* (2006.01)    *A23L 5/46* (2016.01)
*C09B 61/00* (2006.01)    *C09B 67/06* (2006.01)

(86) International application number:
**PCT/JP2017/022666**

(87) International publication number:
**WO 2018/003599 (04.01.2018 Gazette 2018/01)**

(54) **COLORING MATERIAL AND METHOD FOR PRODUCING COLORING MATERIAL**

FARBSTOFFMATERIAL UND VERFAHREN ZUR HERSTELLUNG VON FARBSTOFFMATERIAL

MATIÈRE COLORANTE ET PROCÉDÉ DE PRODUCTION DE MATIÈRE COLORANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2016 JP 2016127845**

(43) Date of publication of application:
**27.03.2019 Bulletin 2019/13**

(73) Proprietor: **DIC Corporation**
**Tokyo 174-8520 (JP)**

(72) Inventors:
• **MIZUSHIMA Yasunori**
**Ichihara-shi**
**Chiba 290-8585 (JP)**

• **KUBO Hiraku**
**Ichihara-shi**
**Chiba 290-8585 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
JP-A- S 626 691    JP-A- H06 212 309
JP-A- H11 299 450    JP-A- 2006 230 272
JP-A- 2006 230 272    JP-A- 2007 211 053
JP-B2- 3 256 318    US-A1- 2014 371 433

**Description**

Technical Field

The present invention relates to a coloring material suitably used for coloring foods, drinks, medicines, cosmetics, and the like and a method for producing the coloring material.

Background Art

While various types of red colorants, yellow colorants, and blue colorants have been used as food colorants, there has been a concern about artificial colorants in terms of carcinogenicity and the like. Consequently, there has been a great demand for natural colorants, which are considered safer than artificial colorants. However, natural colorants have both advantages and disadvantages in terms of physical properties. In particular, there are not many natural red and blue pigments having clear tone.

Phycocyanin and phycoerythrin, which are algae pigments, are clear blue and red pigments, respectively. These algae pigments have not been used in a wide range of applications because they are protein-bonded pigments, which have particularly low thermal stability. Furthermore, in the process for producing the pigments, these pigments are likely to, for example, become degraded in a thermal sterilization step.

Various vehicles have been studied in order to enhance the thermal stability of protein-bonded pigments, which are originally poor in thermal stability.

For example, in a method for producing an algae coloring material described in PTL 1, an aqueous solution that includes an algae pigment and trehalose as essential components is dried. Trehalose is a nonreducing disaccharide consisting of two molecules of glucose joined to each other and is a sugar widely found in nature, such as plants and microorganisms. It is described that, in the algae coloring material produced by the above production method which includes an algae pigment and trehalose, thermal stability is imparted to the algae pigment and this increases the rate at which the pigment is recovered in the production process and enables a rationalization of the drying method.

US 2014/371433 A1 describes a preparation method for phycocyanin, including: adding chitosan to a suspension of cyanobacteria containing phycocyanin; and filtering the suspension.

JP S62 6691 A describes a phycocyanin pigment A which is a blue pigment protein having properties of the maximum absorption wavelength at 610-620 nm and a structure of a ring opened tetrapyrrole linked to a protein, present in blue-green algae growing at $\geq$ 45 °C, having -5-80 °C stable temperature range of the pigment, 2-9 stable pH range of the pigment, 7 optimum pH, constituted of alpha and beta subunits having 18,000 $\pm$ 1,000 mol. wt. of the pigment protein and having 450-750 nm absorption wavelength spectrum. This is used as a colorant for foods, cosmetics and medicines. The document describes the preparation of the pigment as follows: Thermophilic blue-green algae, e.g. the genus Synechoccus, growing at $\geq$ 45 °C are transplanted to BG-1 culture medium at 1% vol./vol., irradiated with light at 1,000-10,000 lux and cultivated at 30-65 °C for 1-2 weeks. The microbial cells are then collected by centrifugation, freeze-dried and added to a buffer solution at 4-7 pH to extract the pigment. The resultant extract solution is then purified by salting out, dialysis, etc.

JP 2006 230272 A relates to the problem to provide a method for extracting phycocyanin contained in blue-green algae, capable of obtaining the phycocyanin with high purity. As a solution to the problem, the document describes a method for extracting the phycocyanin from the blue-green algae which includes a first process for obtaining an extract solution which is given by making the phycocyanin in the blue-green algae extracted into an aqueous suspension, a second process for obtaining calcium phosphate, by reacting a calcium salt with a phosphate salt in the extract solution, and simultaneously obtaining an adsorbate by making the calcium phosphate adsorb impurities in the phycocyanin, and a third process for removing residues of the blue-green algae and the adsorbate from the extract solution.

JP 3 256318 B2 relates to the problem to realize the stable and efficient isolation of each of pure pigments comprising phycocyanin, chlorophyll and carotenoid contained in algae. As a solution to the problem, the document describes that the supernatant liquid of an algae extract having removed residues therefrom is frozen and then melted to further remove residues, and phycocyanin contained in this supernatant liquid is gathered through isoelectric precipitation. The residue centrifugally separated from the extract is extracted with an organic solvent, and carotenoid and chlorophyll are separated from this extract.

Citation List

Patent Literature

PTL 1: Japanese Unexamined Patent Application Publication No. 11-299450

Summary of Invention

Technical Problem

However, coloring agents including trehalose are likely to become degraded after absorbing moisture and poorly soluble in water. That is, it is difficult to handle such coloring agents in powder form. Accordingly, a material having excellent thermal stability and improved physical properties has been anticipated.

The present invention was made in light of the foregoing issues. An object of the present invention is to provide a coloring material that has excellent thermal stability and is easy to handle and a method for producing such a coloring material.

Solution to Problem

The inventors of the present invention have conducted extensive studies in order to address the foregoing issues and, consequently, found that the issues may be addressed by a coloring material that includes a chelating agent in addition to a protein-based pigment. Thus, the present invention was made. The invention is defined by the claims.

Specifically, the coloring material and a method for producing the coloring material according to the present invention have the following features.

(1) A coloring material including a protein-based pigment and a chelating agent,
the protein-based pigment including a phycobiliprotein,
the content of the protein-based pigment in the coloring material being 1% by mass or more and 70 % by mass or less,
the content of the chelating agent in the coloring material being 30% by mass or more and 99% by mass or less,
with the content of solid components in the coloring material being 100% by mass,
wherein the content of water in the coloring material is 15% by mass or less,
the coloring material is a powder, and
the chelating agent includes at least one compound selected from the group consisting of citric acid, malic acid, ethylenediaminetetraacetic acid, and salts of citric acid, malic acid, and ethylenediaminetetraacetic acid.

(2) The coloring material described in (1), wherein the phycobiliprotein includes phycocyanin.

(3) The coloring material described in any one of (1) or (2), wherein the total content of the protein-based pigment and the chelating agent in the coloring material is 60% to 100% by mass with the content of solid components in the coloring material being 100% by mass.

(4) The coloring material described in any one of (1) to (3), wherein the content of trehalose in the coloring material is 20% by mass or less with the content of solid components in the coloring material being 100% by mass.

(5) A method for producing the coloring material described in any one of (1) to (4), the method including a drying step in which a pigment composition including a protein-based pigment, a chelating agent, and a solvent is dried.

(6) The method for producing the coloring material described in (5), wherein the drying is performed by spray drying.

(7) Use of the coloring material according to (1) in the preparation of a food, a drink, a medicine or a cosmetic.

Advantageous Effects of Invention

According to the present invention, a coloring material that has excellent thermal stability and is easy to handle and a method for producing such a coloring material may be provided.

Brief Description of Drawings

[Fig. 1] Fig. 1 includes images illustrating the results of the moisture absorptivity of coloring material powders prepared in Examples.

[Fig. 2] Fig. 2 is a graph illustrating the results of the thermal stability of coloring material powders prepared in Examples.

[Fig. 3] Fig. 3 includes images illustrating the results of the moisture absorptivity of coloring material powders prepared in Examples.

[Fig. 4] Fig. 4 is a graph illustrating the results of the solubility of coloring material powders in water which were prepared in Examples.

[Fig. 5] Fig. 5 includes images illustrating the results of the moisture absorptivity of coloring material powders prepared in Examples.

<Coloring Material>

The present invention is described on the basis of the preferred embodiment below.

A coloring material according to the embodiment is a coloring material including a protein-based pigment and a chelating agent as defined in claim 1.

The contents of the protein-based pigment and the chelating agent in the coloring material are 1% by mass or more and 70 % by mass or less with the content of solid components in the coloring material being 100% by mass.

(Protein-Based Pigment)

The term "protein-based pigment" used herein refers to a pigment composed of a protein or a pigment that includes a protein. Examples of a pigment that includes a protein include a protein-bonded pigment consisting of a component other than a protein and a protein bonded to the component. The bonding may be either a covalent bond or a noncovalent bond.

The protein-based pigment includes a phycobilin-protein complex (i.e., a phycobiliprotein).

The protein-based pigment may further include one or more compounds selected from the group consisting of a chlorophyll-protein complex and a carotenoid-protein complex.

The protein-based pigment may have a tetrapyrrole ring structure or an open tetrapyrrole structure.

As the protein-based pigment included in the coloring material a phycobiliprotein is used. The protein-based pigment includes a phycobiliprotein. The protein-based pigment may include a phycobiliprotein as a principal constituent. The expression "include a phycobiliprotein as a principal constituent" means that the content of the phycobiliprotein in the protein-based pigment is 50% by mass or more and 100% by mass or less with the content of solid components in the protein-based pigment being 100% by mass. The content of the phycobiliprotein in the protein-based pigment may be 70% by mass or more and 98% by mass or less and may be 90% by mass or more and less than 95% by mass.

The term "phycobiliprotein" used as a pigment refers to a substance consisting of an apoprotein (i.e., a protein portion) and a phycobilin pigment (i.e., a non-protein portion) covalently bonded to the apoprotein. A phycobilin pigment bonded to a phycobiliprotein produces a markedly clear color. However, the color of the phycobilin pigment becomes faded when the phycobiliprotein is subjected to a high temperature or the like, which causes degeneration of the protein portion. Therefore, a coloring material that includes a phycobiliprotein and is resistant to fading is anticipated.

Examples of the phycobiliprotein include allophycocyanin, phycocyanin, phycoerythrocyanin, and phycoerythrin. The phycocyanin may be either C-phycocyanin or R-phycocyanin. The protein-based pigment according to the embodiment may include phycocyanin. The protein-based pigment may include phycocyanin as a principal constituent. The expression "include phycocyanin as a principal constituent" means that the content of phycocyanin in the protein-based pigment is 50% by mass or more and 100% by mass or less with the content of solid components in the protein-based pigment being 100% by mass. The content of the phycocyanin in the protein-based pigment may be 70% by mass or more and 98% by mass or less.

The phycobiliprotein is preferably an algae pigment produced from alga and is more preferably a cyanobacterial pigment produced from cyanobacteria.

Examples of genera of cyanobacteria include arthrospira, spirulina, and aphanothece. Microscopic unicellular microorganisms belonging to the arthrospira genus, which has been collectively referred to as "spirulina genus", and the spirulina genus are commonly referred to as "spirulina". Specific examples thereof include arthrospira platensis, arthrospira maxima, arthrospira geitleri, arthrospira siamese, spirulina major, and spirulina subsalsa. Among these, arthrospira platensis, arthrospira maxima, arthrospira geitleri, and arthrospira siamese are preferably used because they can be artificially cultured and easily available.

The protein-based pigment may be a spirulina pigment that includes, as a principal constituent, a phycobiliprotein produced from cyanobacteria that belong to the arthrospira genus or the spirulina genus (hereinafter, such cyanobacteria may be referred to as "spirulina"). The expression "includes, as a principal constituent" means that the content of the phycobiliprotein in the spirulina pigment is 50% by mass or more and 100% by mass or less with the content of solid components in the spirulina pigment being 100% by mass. The content of the phycobiliprotein in the spirulina pigment may be 70% by mass or more and 98% by mass or less and may be 90% by mass or more and less than 95% by mass.

The protein-based pigment is preferably phycocyanin produced from cyanobacteria that belong to the arthrospira genus or the spirulina genus. The phycocyanin may be either natural phycocyanin or artificial phycocyanin that shows blue or a color other than blue and has functions comparable to those of natural phycocyanin.

The method for producing phycocyanin from cyanobacteria that belong to the arthrospira genus or the spirulina genus is not limited. For example, a method in which phycocyanin is extracted from spirulina into a buffer solution may be used. For example, the method described in the document (Japanese Unexamined Patent Application Publication No. 52-134058) may be used.

(Chelating Agent)

A "chelating agent" is a compound capable of forming a chelate complex with metal ions. It is not clear in this embodiment whether the chelating agent directly bonds to the substances constituting the protein-based pigment to form a chelate compound. On the other hand, the inventors of the present invention found an unexpected fact that a coloring material that includes a chelating agent in addition to the protein-based pigment has excellent thermal stability.

The chelating agent includes at least one compound selected from the group consisting of citric acid, malic acid, ethylenediaminetetraacetic acid, and salts of citric acid, malic acid, and ethylenediaminetetraacetic acid.

Examples of the salts include a Na salt, a K salt, a Mg salt, and a Zn salt. A Na salt is preferable.

Examples of a salt of citric acid include trisodium citrate. Examples of a salt of malic acid include disodium malate. Examples of a salt of ethylenediaminetetraacetic acid include disodium ethylenediaminetetraacetate and trisodium ethylenediaminetetraacetate.

The inventors of the present invention found that salts of citric acid, malic acid, and ethylenediaminetetraacetic acid enhance the thermal stability of the protein-based pigment as described in Examples below.

One of the functional groups the above substances, that is, citric acid, malic acid, and ethylenediaminetetraacetic acid, include in common is a carboxyl group.

(Proportions of Constituents)

The "solid component" of the coloring material according to the embodiment is the nonvolatile component of the coloring material which is a part of the coloring material other than volatile substances, such as water. Examples of the solid component of the coloring material include the protein-based pigment and the chelating agent.

The content of the protein-based pigment in the coloring material is 1% by mass or more and 70 % by mass or less, may be 5% by mass or more and 70 % by mass or less, may be 10% by mass or more and 70 % by mass or less, may be 15% by mass or more and 70% by mass or less, may be 20% by mass or more and 60% by mass or less, may be 25% by mass or more and 50% by mass or less, and may be 25% by mass or more and 35% by mass or less, with the content of solid components in the coloring material being 100% by mass.

When the content of the protein-based pigment in the coloring material measured with the content of solid components in the coloring material being 100% by mass falls within the above range, the coloring material has a good coloring capability.

The content of the chelating agent in the coloring material according to the embodiment is 30% by mass or more and 99% by mass or less, may be 30% by mass or more and 95% by mass or less, may be 30% by mass or more and 90% by mass or less, may be 30% by mass or more and 85% by mass or less, may be 40% by mass or more and 80% by mass or less, may be 50% by mass or more and 75% by mass or less, and may be 55% by mass or more and 70% by mass or less, with the content of solid components in the coloring material being 100% by mass.

When the content of the chelating agent in the coloring material measured with the content of solid components in the coloring material being 100% by mass falls within the above range, the coloring material has good thermal stability.

The coloring material may include, in addition to the protein-based pigment and the chelating agent, solid components other than the protein-based pigment or the chelating agent. Examples of the other solid components of the coloring material include a vehicle, a preservative, vitamins, minerals, substances derived from the above alga which are other than the protein-based pigments, and substances derived from components of media used for cultivating the alga.

For example, the coloring material according to an embodiment includes the protein-based pigment, the chelating agent, and one or more of the above components such that the total content of solid components in the coloring material does not exceed 100% by mass.

The total content of the protein-based pigment and the chelating agent in the coloring material may be 60% by mass or more and 100% by mass or less, may be 60% by mass or more and 98% by mass or less, may be 70% by mass or more and 95% by mass or less, may be 80% by mass or more and 93% by mass or less, and may be 85% by mass or more and 92% by mass or less, with the content of solid components in the coloring material being 100% by mass.

When the total content of the protein-based pigment and the chelating agent in the coloring material measured with the content of solid components being 100% by mass falls within the above range, the content of the components other than the protein-based pigment or the chelating agent is low. In such a case, the coloring capability and/or the thermal stability of the coloring material per unit mass is high. Furthermore, the costs related to the other components, such as transportation cost, can be reduced.

For example, coloring materials that include at least one compound selected from the group consisting of a sugar, a sugar alcohol, and a polyhydric alcohol are known. Some of the conventional coloring materials include the above compounds in large amounts.' In contrast, the coloring material according to an embodiment of the present invention enables the thermal stability of the protein-based pigment to be enhanced even when the coloring material does not include the above compounds in large amounts.

The content of at least one compound selected from the group consisting of a sugar, a sugar alcohol, and a polyhydric alcohol in the coloring material according to the embodiment, which is measured with the content of solid components in the coloring material being 100% by mass, may be 50% by mass or less, may be 40% by mass or less, may be 30% by mass or less, may be 20% by mass or less, may be 10% by mass or less, may be 5% by mass or less, and may be 1% by mass or less. The proportion of at least one compound selected from the group consisting of a sugar, a sugar alcohol, and a polyhydric alcohol to the solid components of the coloring material according to the embodiment may be substantially zero.

When the content of at least one compound selected from the group consisting of a sugar, a sugar alcohol, and a polyhydric alcohol in the coloring material measured with the content of solid components being 100% by mass falls within the above range, the coloring material has low moisture absorptivity and excellent preservability under a humid condition.

coloring materials that include trehalose are known. While some of the conventional coloring materials include trehalose in large amounts, the coloring material according to the embodiment enables the thermal stability of the protein-based pigment to be enhanced even when the coloring material does not include trehalose in a large amount.

The content of trehalose in the coloring material according to the embodiment may be 50% by mass or less, may be 40% by mass or less, may be 30% by mass or less, may be 20% by mass or less, may be 10% by mass or less, may be 5% by mass or less, and may be 1% by mass or less, with the content of solid components in the coloring material being 100% by mass. The proportion of trehalose to the solid components of the coloring material according to the embodiment may be substantially zero.

When the content of trehalose in the coloring material measured with the content of solid components being 100% by mass falls within the above range, the coloring material has low moisture absorptivity and excellent preservability under a humid condition.

The mass ratio of the protein-based pigment to the chelating agent included in the coloring material according to the embodiment, that is, "Mass of protein-based pigment/Mass of chelating agent", may be 0.007 or more and 7 or less, may be 0.08 or more and 3 or less, may be 0.2 or more and 2 or less, and may be 0.3 or more and less than 0.7.

When the mass ratio of the protein-based pigment to the chelating agent falls within the above range, the coloring material advantageously has both high coloring capability and high thermal stability in a balanced manner.

The content (mass%) of the protein-based pigment in the coloring material measured with the content of solid components in the coloring material being 100% by mass can be determined by a publicly known analysis or measurement method. The content (mass%) of the chelating agent in the coloring material measured with the content of solid components in the coloring material being 100% by mass can be determined by a publicly known analysis or measurement method.

For example, the mass of the protein-based pigment included in the coloring material can be determined on the basis of the absorbance of a solution of the coloring material which is prepared by dissolving the coloring material in a solvent. As for commonly known protein-based pigments, it is known that the wavelength of maximal absorbance of a protein-based pigment in the solution has a relationship with the concentration% (w/v) of the protein-based pigment. That is, the proportion (mass%) of the protein-based pigment in the coloring material can be determined on the basis of the absorbance of the solution of the coloring material at the wavelength of maximal absorbance. For example, the concentrations (g/L) of C-phycocyanin (cPC) and allophycocyanin (aPC) in the sample can be determined from the absorbance at the wavelength of maximal absorbance by the method described in the document (Yoshikawa, N. and Belay, A. (2008) "Single-laboratory validation of a method for the determination of c-phycocyanin and allophycocyanin in spirulina (arthrospira) supplements and raw materials by spectrophotometry" Journal of Aoac International VOL. 91, 524-529). The wavelength of maximal absorbance of cPC in the solution of the coloring material is 620 nm. The wavelength of maximal absorbance of aPC in the solution of the coloring material is 650 nm. The amount of phycocyanin included in spirulina can be considered to be the total amount of cPC and aPC.

For example, the concentration of cPC in the sample can be calculated using the following formula.

$$cPC \ (mg/mL) = 0.162 \times OD620 - 0.098 \times OD650$$

For example, the concentration of aPC in the sample can be calculated using the following formula.

$$aPC \ (mg/mL) = 0.180 \times OD650 - 0.042 \times OD620$$

The content of the pigment in the coloring material according to the embodiment can be expressed using color value.

The coloring material according to the embodiment is a coloring material including a protein-based pigment and a chelating agent, the coloring material having a color value of 4 or more and 540 or less, the content of the chelating agent in the coloring material being 10% by mass or more and 99% by mass or less with the content of solid components in the coloring material being 100% by mass.

For example, a powder pigment having a maximal absorbance at a wavelength of 618 nm and a color value of 400 or more and 600 or less at a wavelength of 618 nm can be produced from cyanobacteria that belong to the arthrospira genus or the spirulina genus. In the case where the coloring material according to the embodiment further includes 10% by mass or more and 99% by mass or less chelating agent with the content of solid components in the coloring material being 100% by mass and the other part of the coloring material is the powder pigment, the color value of the coloring material according to the embodiment may be, for example, 4 (4 = 400 - 400 × 0.99) to 540 (540 = 600 - 600 × 0.1).

The color value of the coloring material according to the embodiment may be 4 or more and 540 or less, may be 20 or more and 540 or less, may be 40 or more and 480 or less, may be 60 or more and 420 or less, may be 80 or more and 360 or less, may be 100 or more and 300 or less, may be 120 or more and 250 or less, and may be 160 or more and 200 or less.

(Color Value)

The term "color value" used herein refers to the value determined in accordance with the method described in the section "Color Value Test" of Japan's Specifications and Standards for Food Additives, 8th Edition (The Ministry of Health, Labour and Welfare). The color value of a colorant is determined by measuring the absorbance of a solution of the coloring material at a wavelength of maximal absorption in the visible region and expressed in terms of the absorbance of a 10w/v% solution of the coloring material (10%E).

To the sample (i.e., the coloring material), about 10 mL of a solvent is added to dissolve the sample therein. A solvent is further added to the resulting solution to accurately prepare 100 mL of a sample solution. McIlvaine buffer (pH: 6.0) is used as a solvent.

The sample solution is used as a test liquid for the measurement of absorbance. The test liquid is prepared such that the absorbance of the test liquid falls within the range of 0.3 to 0.7. The absorbance A of a liquid layer having a length of 1 cm is measured at the measurement wavelength using the solvent used for preparing the test liquid as a reference. The color value of the sample can be calculated using the following formula (where, F represents the dilution factor of the sample in the test liquid).

[Math. 1]

$$\text{Color value} = 10 \times A \times F/\text{Amount of sample taken (g)}$$

The McIlvaine buffer (pH: 6.0) used as a solvent can be produced by, for example, mixing 12.63 mL of 0.2 mol/L $Na_2HPO_4$ with 7.37 mL of 0.1 mol/L citric acid. The measurement wavelength may be set adequately in accordance with the wavelength of maximal absorption of the sample solution. For example, when the following protein-based pigments are used as a principal constituent among the pigments included in the sample solution, the following measurement wavelengths are used:

Phycocyanin is the principal constituent: 610 to 630 nm
Phycoerythrin is the principal constituent: 550 to 570 nm
Allophycocyanin is the principal constituent: 640 to 660 nm

<Properties of Coloring Material>

(Thermal Stability)

The change (i.e., pigment retention ratio) in the color value (10%E: absorbance expressed in terms of the absorbance of a 10% (w/v) solution of the coloring material) of the coloring material according to the embodiment which occurs during a dry-heat treatment, which can be calculated using the following formula, may be 75% or more, may be 80% or more, and may be 85% or more. The color values (10%E) of a coloring material that has not been subjected to the dry-heat treatment and a coloring material that has been subjected to the dry-heat treatment are measured as follows.

A dry coloring material having a moisture content of 20% by mass or less is stored in a dryer kept at 105°C for 16 hours in order to perform a dry-heat treatment. A coloring material that has not been subjected to the dry-heat treatment and the coloring material that has been subjected to the dry-heat treatment are dissolved in McIlvaine buffer (pH: 6.0) to form pigment solutions such that the concentrations of the coloring materials fall within a range suitable for spectroscopic analysis. The color value of each of the coloring materials at the wavelength (i.e., 618 nm) of maximal absorption of the pigment contained in the pigment solution is measured.

$$\text{Pigment retention ratio (\%) = Color value after dry-heat}$$
$$\text{treatment/Color value before dry-heat treatment} \times 100$$

The above pigment retention ratio may be 75% or more and 90% or less, may be 80% or more and 90% or less, and may be 85% or more and 90% or less.

(Moisture Absorptivity)

It is preferable that a coloring material prepared by drying a dry coloring material having a moisture content of 15% by mass or less under normal pressure at a drying temperature of 105°C for a drying time of 2 hours and storing the dried coloring material at 40°C and a relative humidity of 75% for 2 hours in order to cause the coloring material to absorb moisture be powder-like.

(Coefficient of Moisture Absorption)

The coefficient of moisture absorption of a coloring material powder prepared by drying a dry coloring material having a moisture content of 15% by mass or less under normal pressure at a drying temperature of 105°C for a drying time of 2 hours and storing the dried coloring material at 40°C and a relative humidity of 75% for 2 hours in order to cause the coloring material to absorb moisture, which can be calculated using the following formula, may be less than 20% by mass, may be 18% or less, and may be 17% or less.

$$\text{Coefficient of moisture absorption (\%) = (Mass of}$$
$$\text{coloring material that has absorbed moisture - Mass of dried}$$
$$\text{coloring material)/Mass of dried coloring material} \times 100$$

The coefficient of moisture absorption may be 5% or more and less than 20%, may be 10% or more and 18% or less, and may be 10% or more and 17% or less.

(Solubility in Water)

The amount of dissolution time it takes to dissolve a dry coloring material having a moisture content of 15% by mass or less added to 100 mL of water at 25°C such that the final concentration of the coloring material is 15% (w/w) in the water while stirring is performed at a rotational speed of 600 rpm may be 20 minutes or less, may be 15 minutes or less, and may be 10 minutes or less.
The dissolution time may be 1 minute or more and 20 minutes or less, may be 3 minutes or more and 15 minutes or less, and may be 5 minutes or more and 10 minutes or less.
The dissolution of the coloring material in water can be confirmed by visually determining the absence of the coloring material powder or by measuring the absorbance of the coloring material at a wavelength of maximal absorption (e.g., 618 nm) of the pigment included in the aqueous pigment solution.
The coloring material may be produced using freeze drying or spray drying. Freeze drying of the coloring material enhances the solubility of the coloring material in water. From this viewpoint, the coloring material is preferably produced by freeze drying. On the other hand, spray drying is suitable for mass production of the coloring material since a large amount of coloring materials can be dried by spray drying. However, coloring materials produced by spray drying are likely to have low solubility in water.
In order to achieve mass production with a low cost and maximize the advantage of the coloring material according to the embodiment, that is, high solubility in water, in a more effective manner, the coloring material is preferably produced by spray drying.

(Moisture Content)

The moisture content in the coloring material according to the embodiment is 15% by mass or less, and may be 10% by mass or less, and may be 5% by mass or less.

The moisture content in the coloring material can be calculated using the following formula after the coloring material has been dried under normal pressure at a drying temperature of 105°C for a drying time of 4 hours.

$$\text{Moisture content (\%)} = (\text{Mass of coloring material before drying} - \text{Mass of coloring material after drying})/\text{Mass of coloring material before drying} \times 100$$

The moisture content may be 0.1% by mass or more and 15% by mass or less, may be 1% by mass or more and 15% by mass or less, may be 2% by mass or more and 10% by mass or less, and may be 3% by mass or more and 5% by mass or less.

When the moisture content in the coloring material falls within the above range, the coloring material is likely to remain in powder-like form and advantageously has excellent preservability and good thermal stability.

(Properties)

The coloring material is a powder. The expression "being a powder" has the same meaning as "being powder-like". The coloring material being a powder, the average particle size of the coloring material may be, for example, 1 $\mu$m or more and 400 $\mu$m or less, may be 5 $\mu$m or more and 200 $\mu$m or less, and may be 10 $\mu$m or more and 50 $\mu$m or less. The average particle size used herein is median size d50 determined from a volume-basis cumulative distribution. The sizes of particles can be measured by, for example, a laser diffraction/scattering method.

<Applications>

The coloring material according to the embodiment is suitably added to the following items: confectionery and bakery, such as an ice cream, a soft-serve ice cream, a cake, a Bavarian cream, a yokan (sweet bean jelly), a jelly, a gum, a gummy candy, and chocolate; noodles, such as soba (buckwheat noodles), udon (thick wheat flour noodles), and somen (thin wheat flour noodles); various types of foods, such as tofu (bean curd), kamaboko (boiled fish paste), and hanpen (pounded fish cake); drinks, such as a matcha (powdered green tea) drink, a green tea drink, a milk drink, a soy milk drink, a vegetable drink, a fruit drink, and a soft drink; and drugs and cosmetics, such as a tablet.

Although the coloring material according to the embodiment is suitably used alone for coloring purpose, the coloring material may also be used in combination with another coloring material.

Examples of the other coloring material include safflower yellow, gardenia yellow, matcha, green tea, and green powders such as barley grass, kale, mulberry, bamboo grass, Jew's mallow, chlorella, green perilla, broccoli, spinach, bell pepper, and angelica.

The coloring material according to the embodiment, which includes the protein-based pigment and the chelating agent in the predetermined proportions, has excellent thermal stability and is easy to handle.

<Method for Producing Coloring Material>

The method for producing coloring material according to the invention is defined by claims 5-6. A method for producing the coloring material according to the embodiment includes a drying step in which a pigment composition including the protein-based pigment, the chelating agent, and a solvent is dried.

That is, the pigment composition can be produced by mixing the above-described solid components that can be included in the coloring material according to the embodiment with a solvent. The proportions of the solid components of the pigment composition are equal to the proportions of the solid components of the coloring material that is to be prepared using the pigment composition. Thus, the proportions of the solid components of the coloring material can be adjusted by changing the proportions of the solid components of the pigment composition.

Examples of the solid components are the same as those described above in <Coloring Material> as examples; the description thereof is omitted.

The type of the solvent can be selected appropriately in accordance with the types of the pigment protein and the chelating agent used. Examples of the solvent include a solvent in which at least the protein-based pigment and the chelating agent can be dissolved. Water is suitably used as a solvent.

The temperatures of the solvent and the pigment composition may be set adequately in accordance with the types of the colorant protein and the chelating agent used and are set to, for example, 0°C or more and 50°C or less.

Any publicly known drying methods, such as freeze drying, spray drying, and vacuum drying, may be used for drying the pigment composition. Among these drying methods, spray drying is preferably used from an industrial viewpoint in order to achieve mass production with a low cost and maximize the advantage of the coloring material according to the embodiment, that is, high solubility in water, in a more effective manner.

When the pigment composition is dried, the solvent included in the pigment composition becomes volatilized and, as a result, the solvent is removed from the pigment composition. Hereby, the coloring material is produced. It is not necessary to remove the whole amount of solvent from the pigment composition. For example, since the solvent may be water, the solvent may be removed from the pigment composition such that the pigment composition includes the solvent within the range described above as an example of the moisture content in the coloring material.

Dissolving the protein-based pigment and the chelating agent in a solvent and then drying the resulting solution enables the chelating agent to impart further high thermal stability to the protein-based pigment.

The method for producing the coloring material according to the embodiment may further include a dry-heat treatment step in which the coloring material produced in the drying step is subjected to a heat treatment. The dry-heat treatment is performed, for example, at 100°C or more and 130°C or less for about 1 hour or more and 30 hours or less.

The method for producing the coloring material according to the embodiment enables production of the coloring material according to the above embodiment.

EXAMPLES

The present invention is further described in detail with reference to Examples below.

<Coloring Material>

The spirulina pigment used in Examples was a spirulina pigment powder (with the amount of pigment powder being 100 mass%, content of protein-based pigment: about 75 mass%, content of phycocyanin: about 75 mass% (c-phycocyanin: 58.5 mass%, allophycocyanin: 16.5 mass%), color value: 485) produced by purifying an extract obtained from cyanobacterium spirulina (arthrospira platensis).

<Evaluation of Moisture Absorptivity>

The evaluation results of moisture absorptivity described in Examples were made by conducting the following test.

Each of the coloring material powders was dried at a drying temperature of 105°C for a drying time of 2 hours. The dried coloring material powders were stored at 40°C and a relative humidity of 75% for 2 hours in order to cause the coloring material powders to absorb moisture. Subsequently, the state of each of the coloring material powders was confirmed.

<Evaluation of Coefficient of Moisture Absorption>

The evaluation results of the coefficient of moisture absorption described in Examples were made by conducting the following test.

Each of the coloring material powders was dried at a drying temperature of 105°C for a drying time of 2 hours. The dried coloring material powders were stored at 40°C and a relative humidity of 75% for 2 hours in order to cause the coloring material powders to absorb moisture. Subsequently, the coefficient of moisture absorption of each of the coloring material powders was measured.

The coefficient of moisture absorption was calculated using the following formula.

```
Coefficient of moisture absorption (%) = (Mass of
coloring material powder that had absorbed moisture - Mass of
dried coloring material powder)/Mass of dried coloring
material powder × 100
```

The dried coloring material powder corresponds to the solid component of the coloring material.

<Evaluation of Solubility in Water>

The evaluation results of solubility in water described in Examples were made by conducting the following test.

Each of the coloring material powders was added to 100 mL of water having a temperature of 25°C such that a final concentration of 15% (w/w) was achieved. The resulting mixture was stirred with a stirrer at a rotational speed of 600 rpm. The amount of dissolution time it took to dissolve the coloring material powder in the water was measured.

<Evaluation of Thermal Stability>

The evaluation results of thermal stability described in Examples were made by conducting the following test.

Each of the coloring material powders was stored in a dryer kept at 105°C for 16 hours in order to perform a dry-heat treatment. A coloring material powder that had not been subjected to the dry-heat treatment and the coloring material powder that had been subjected to the dry-heat treatment were dissolved in McIlvaine buffer (pH: 6.0) to form pigment solutions such that the concentration of the coloring material fell within a range suitable for spectroscopic analysis. The change (i.e., the pigment retention ratio) in the color value (10%E: absorbance expressed in terms of the absorbance of a 10% (w/v) solution of the coloring material) at the wavelength (i.e., 618 nm) of maximal absorption of the pigment contained in the pigment solution was measured.

The pigment retention ratio was calculated using the following formula.

```
pigment retention ratio (%) = Color value after dry-heat
treatment/Color value before dry-heat treatment × 100
```

[Example 1]

The spirulina pigment and citric acid 3Na were dissolved in water such that the proportions of the spirulina pigment and the citric acid 3Na were 40% (w/w) and 60% (w/w), respectively. The resulting solution was spray-dried to form a powder. Hereby, a coloring material powder of Example 1 was prepared.

[Comparative Example 1]

The spirulina pigment, trehalose, and citric acid 3Na were dissolved in water such that the proportions of the spirulina pigment, the trehalose, and the citric acid 3Na were 40% (w/w), 55% (w/w), and 5% (w/w), respectively. The resulting solution was spray-dried to form a powder. Hereby, a coloring material powder of Comparative example 1 was prepared.

[Table 1]

|  | Composition | | | Moisture absorptivity | Solubility in water | Thermal stability |
|---|---|---|---|---|---|---|
|  | Spirulina pigment | Citric acid 3Na | Trehalose | Coefficient of moisture absorption [mass%] | Dissolution time [min] | Pigment retention ratio [%] |
| Example 1 | 40 | 60 | - | 16 | 10 | 86 |
| Comparative example 1 | 40 | 5 | 55 | 21 | 35 | 90 |
| Note: In the above table, all values are in % (w/w). | | | | | | |

(Moisture Absorptivity)

The coefficient of moisture absorption and moisture absorptivity of each of the coloring material powders prepared in Example 1 and Comparative example 1 were determined.

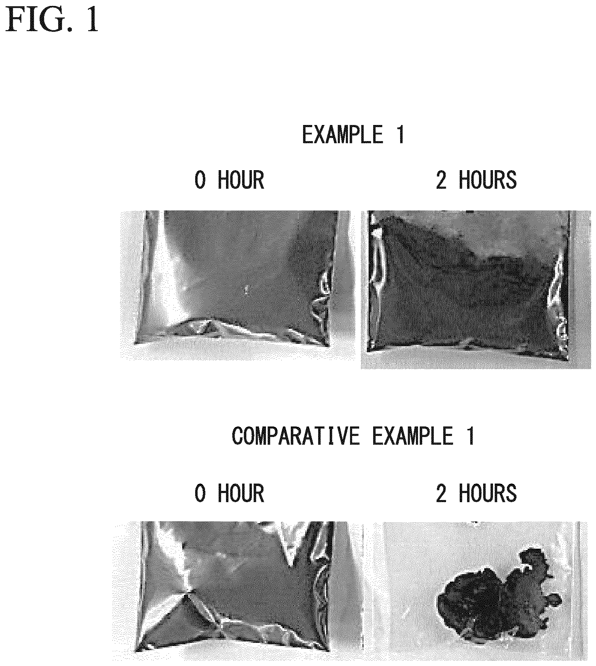

Table 1 and Fig. 1 show the results. Fig. 1 includes photographs illustrating the states of the coloring material powders prepared in Example 1 and Comparative example 1 that had not yet absorbed moisture (0 hour) and that had absorbed moisture (2 hours).

The coefficient of moisture absorption of the coloring material powder prepared in Example 1, which included citric acid 3Na, was 16% by mass, while the coefficient of moisture absorption of the coloring material powder prepared in Comparative example 1, which included trehalose, was 21% by mass. The coloring material powder prepared in Example 1 remained in powder form as it was before absorbing moisture, even after absorbing moisture for 2 hours. On the other hand, the coloring material powder prepared in Comparative example 1 entirely formed lumps after absorbing moisture for 2 hours. That is, the coloring material powder prepared in Comparative example 1 did not remain in powder form.

The above results confirm that the coloring material powder prepared in Example 1, which included citric acid 3Na, had higher resistance to moisture absorption than the coloring material powder prepared in Comparative example 1, which included trehalose. Accordingly, it is easy to maintain the coloring material powder prepared in Example 1 in powder form and the coloring material powder prepared in Example 1 is easy to handle. It was confirmed that the coloring material powder prepared in Example 1 had excellent preservability under a high-temperature, high-humidity condition.

(Solubility in Water)

The solubility of each of the coloring material powders prepared in Example 1 and Comparative example 1 in water was determined.

Table 1 shows the results. The coloring material powder prepared in Example 1 had a dissolution time of 10 minutes, while the coloring material powder prepared in Comparative example 1 had a dissolution time of 35 minutes.

The above results confirm that the coloring material powder prepared in Example 1, which included citric acid 3Na, had higher solubility in water and was therefore easier to handle than the coloring material powder prepared in Comparative example 1, which included trehalose.

(Thermal Stability)

The thermal stability of each of the coloring material powders prepared in Example 1 and Comparative example 1 was determined.

Table 1 shows the results. The coloring material powder prepared in Example 1 had a pigment retention ratio of 86%, while the coloring material powder prepared in Comparative example 1 had a pigment retention ratio of 90%.

The above results confirm that the coloring material powder prepared in Example 1, which included citric acid 3Na, had excellent thermal stability comparable to that of the coloring material powder prepared in Comparative example 1, which included trehalose.

<Study of Thermal Stability and Proportion of Citric Acid 3Na>

[Comparative Example 2 and Examples 2 to 10]

The spirulina pigment and citric acid 3Na were dissolved in water such that the proportions of the spirulina pigment and the citric acid 3Na were 0% to 90% as described in Table 2. The resulting solution was freeze-dried to form a powder. Hereby, coloring material powders of Examples 2 to 10 were prepared.

[Comparative Examples 3 to 12]

The spirulina pigment and a dextrin (substance name: dextrin, produced by: Matsutani Chemical Industry Co., Ltd., product name: Pinedex #2) were dissolved in water such that the proportions of the spirulina pigment and the dextrin were 0% to 90% as described in Table 3. The resulting solution was freeze-dried to form a powder. Hereby, coloring material powders of Comparative examples 3 to 12 were prepared.

[Table 2]

|  | Composition | | Thermal stability |
|---|---|---|---|
|  | Spirulina pigment | Citric acid 3Na | Pigment retention ratio [%] |
| Comparative example 2 | 100 | - | 72.3 |
| Example 2 | 90 | 10 | 75.5 |
| Example 3 | 80 | 20 | 78.7 |
| Example 4 | 70 | 30 | 82.0 |

(continued)

|  | Composition | | Thermal stability |
| --- | --- | --- | --- |
|  | Spirulina pigment | Citric acid 3Na | Pigment retention ratio [%] |
| Example 5 | 60 | 40 | 84.3 |
| Example 6 | 50 | 50 | 85.1 |
| Example 7 | 40 | 60 | 86.1 |
| Example 8 | 30 | 70 | 87.9 |
| Example 9 | 20 | 80 | 85.8 |
| Example 10 | 10 | 90 | 89.0 |
| Note: In the above table, all values are in % (w/w). | | | |

[Table 3]

|  | Composition | | Thermal stability |
| --- | --- | --- | --- |
|  | Spirulina pigment | Dextrin | Pigment retention ratio [%] |
| Comparative example 3 | 100 | - | 72.3 |
| Comparative example 4 | 90 | 10 | 54.2 |
| Comparative example 5 | 80 | 20 | 65.2 |
| Comparative example 6 | 70 | 30 | 69.2 |
| Comparative example 7 | 60 | 40 | 71.4 |
| Comparative example 8 | 50 | 50 | 71.6 |
| Comparative example 9 | 40 | 60 | 72.6 |
| Comparative example 10 | 30 | 70 | 74.4 |
| Comparative example 11 | 20 | 80 | 78.0 |
| Comparative example 12 | 10 | 90 | 79.7 |
| Note: In the above table, all values are in % (w/w). | | | |

(Thermal Stability)

The thermal stability of each of the coloring material powders prepared in Comparative example 2, Examples 2 to 10, and Comparative examples 3 to 12 was determined.

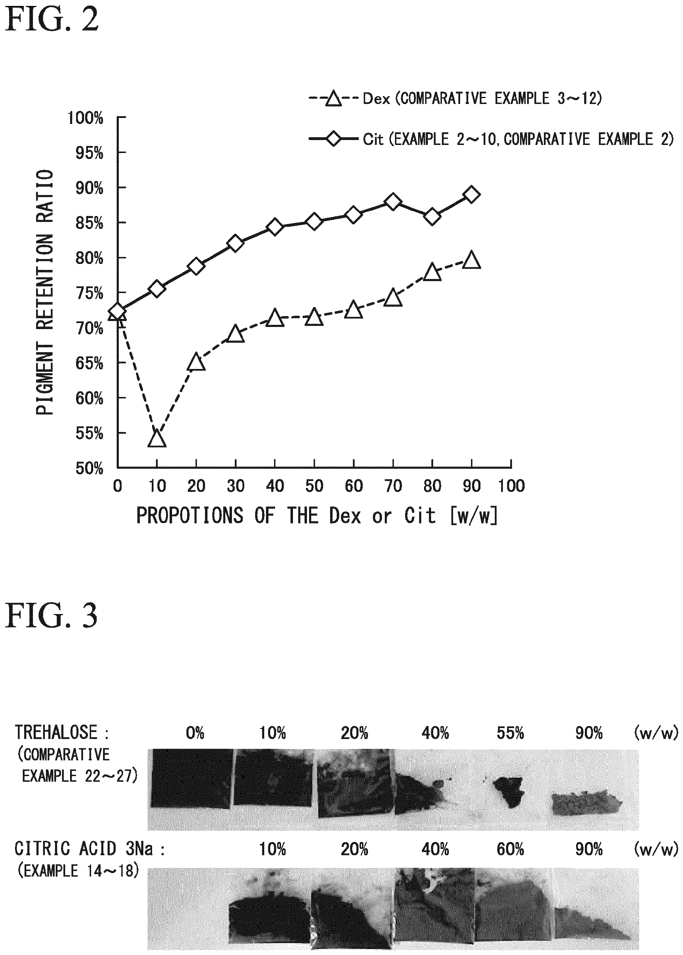

Tables 2 and 3 and Fig. 2 show the results. Fig. 2 is a graph illustrating the pigment retention ratios of the coloring material powders prepared in Comparative example 2, Examples 2 to 10, and Comparative examples 3 to 12.

The above results confirm that the coloring material powders prepared in Examples 2 to 10, which included citric acid 3Na (Cit), had higher thermal stability than the coloring material powder of Comparative example 2, which did not include citric acid 3Na.

It was also confirmed that the coloring material powders prepared in Examples 2 to 10, which included citric acid 3Na (Cit), had higher thermal stability than the coloring material powders prepared in Comparative examples 3 to 12, which included dextrin (Dex).

It was confirmed that, as for the coloring material powders prepared in Examples 2 to 10, the higher the ratio of citric acid 3Na to the spirulina pigment, the higher the thermal stability of the coloring material powder.

<Study of Thermal Stability and Chelating Agent>

[Examples 11 to 13]

The spirulina pigment and a specific one of the various chelating agents shown in Table 4 were dissolved in water such that the proportions of the spirulina pigment and the chelating agent were 40% (w/w) and 60% (w/w), respectively. The resulting solution was freeze-dried to form a powder. Hereby, coloring material powders of Examples 11 to 13 were prepared.

[Table 4]

| | | Composition | | | Thermal stability |
| --- | --- | --- | --- | --- | --- |
| | Spirulina pigment | Citric acid 3Na | Malic acid 2Na | Ethylenediaminetetraacetic acid 3Na | Pigment retention ratio [%] |
| Example 11 | 40 | 60 | - | - | 86.4 |
| Example 12 | 40 | - | 60 | - | 88.4 |
| Example 13 | 40 | - | - | 60 | 91.1 |
| Note: In the above table, all values are in % (w/w). | | | | | |

The spirulina pigment was dissolved in water. The resulting solution was freeze-dried to form a powder. Hereby, a coloring material powder of Comparative example 13 was prepared.

The spirulina pigment and a specific one of the various saccharides and salts shown in Table 5 were dissolved in water such that the proportions of the spirulina pigment and the saccharide or salt were 40% (w/w) and 60% (w/w), respectively. The resulting solution was freeze-dried to form a powder. Hereby, coloring material powders of Comparative examples 14 to 21 were prepared.

[Table 5]

| | Composition | | | | | | | | | Thermal stability |
| --- | --- | --- | --- | --- | --- | --- | --- | --- | --- | --- |
| | Spirulina pigment | Trehalose | Dextrin | Mal | Suc | Asc | NaP | NaCl | KCl | Pigment retention ratio [%] |
| Comparative example 13 | 100 | - | - | - | - | - | - | - | - | 73.0 |
| Comparative example 14 | 40 | 60 | - | - | - | - | - | - | - | 90.2 |
| Comparative example 15 | 40 | - | 60 | - | - | - | - | - | - | 73.0 |
| Comparative example 16 | 40 | - | - | 60 | - | - | - | - | - | 73.7 |
| Comparative example 17 | 40 | - | - | - | 60 | - | - | - | - | 71.9 |
| Comparative example 18 | 40 | - | - | - | - | 60 | - | - | - | 77.0 |
| Comparative example 19 | 40 | - | - | - | - | - | 60 | - | - | 77.9 |
| Comparative example 20 | 40 | - | - | - | - | - | - | 60 | - | 67.3 |
| Comparative example 21 | 40 | - | - | - | - | - | - | - | 60 | 77.2 |
| Note: In the above table, all values are in % (w/w). | | | | | | | | | | |

The saccharides and salts shown in Table 5 are as follows.

- Mal: Maltitol

- Suc: Sucrose

- Asc: Ascorbic acid Na

- NaP: Phosphoric acid 2Na
  (the others are as shown by name or chemical formula)

(Thermal Stability)

The thermal stability of each of the coloring material powders prepared in Examples 11 to 13, and Comparative examples 13 to 21 was determined.
Tables 4 and 5 show the results. These results confirm that the coloring material powders (Examples 11 to 13) that included a chelating agent (Cit, Malic, or EDTA) had a high pigment retention ratio of 85% or more.
The coloring material powders (Comparative examples 14 to 21) that included the saccharides and salts shown in Table 5 had a pigment retention ratio substantially equal to the pigment retention ratio of the coloring material powder (Comparative example 13) that did not include any of the saccharides and salts.

<Study of Moisture Absorptivity and Mixing Ratio and Study of Solubility in Water and Mixing Ratio>

[Examples 14 to 18]

The spirulina pigment and citric acid 3Na were dissolved in water such that the proportions of the spirulina pigment and the citric acid 3Na were 10% to 90% as described in Table 6. The resulting solution was freeze-dried to form a powder. Hereby, coloring material powders of Examples 14 to 18 were prepared.

[Table 6]

|  | Composition | | Solubility in water |
|---|---|---|---|
|  | Spirulina pigment | Citric acid 3Na | Dissolution time [min] |
| Example 14 | 90 | 10 | 5.0 |
| Example 15 | 80 | 20 | 3.0 |
| Example 16 | 60 | 40 | 2.0 |
| Example 17 | 40 | 60 | 2.0 |
| Example 18 | 10 | 90 | 2.7 |
| Note: In the above table, all values are in % (w/w). | | | |

[Comparative Examples 22 to 27]

The spirulina pigment and trehalose were dissolved in water such that the proportions of the spirulina pigment and the trehalose were 0% to 90% as described in Table 7. The resulting solution was freeze-dried to form a powder. Hereby, coloring material powders of Comparative examples 22 to 27 were prepared.

[Table 7]

|  | Composition | | | Solubility in water |
|---|---|---|---|---|
|  | Spirulina pigment | Trehalose | Citric acid 3Na | Dissolution time [min] |
| Comparative example 22 | 100 | - | - | 6.0 |
| Comparative example 23 | 85 | 10 | 5 | 7.0 |
| Comparative example 24 | 75 | 20 | 5 | 4.0 |

(continued)

| | Composition | | | Solubility in water |
|---|---|---|---|---|
| | Spirulina pigment | Trehalose | Citric acid 3Na | Dissolution time [min] |
| Comparative example 25 | 55 | 40 | 5 | 7.0 |
| Comparative example 26 | 40 | 55 | 5 | 5.0 |
| Comparative example 27 | 5 | 90 | 5 | 3.0 |
| Note: In the above table, all values are in % (w/w). | | | | |

(Moisture Absorptivity)

The moisture absorptivity of each of the coloring material powders prepared in Examples 14 to 18 and Comparative examples 22 to 27 was determined.

Fig. 3 shows the results. Fig. 3 includes photographs illustrating the states of the coloring material powders prepared in Examples 14 to 18 and Comparative examples 22 to 27 that had absorbed moisture (2 hours).

The coloring material powders prepared in Examples 14 to 18, which included citric acid 3Na, remained in powder form as they were before absorbing moisture, even after absorbing moisture for 2 hours. Although the coloring material powder prepared in Example 18 was likely to form flocs, the flocs were brittle and easily broken and, therefore, the coloring material powder prepared in Example 18 could remain in powder form.

The coloring material powders prepared in Comparative examples 22 to 24, which did not include a vehicle such as trehalose or includes trehalose, remained in powder form even after absorbing moisture for 2 hours.

The coloring material powders prepared in Comparative examples 25 and 26 were partly formed into rubber-like lumps after absorbing moisture for 2 hours. The coloring material powder prepared in Comparative example 27 entirely became melted and solidified after absorbing moisture for 2 hours.

The above results confirm that each of the coloring material powders prepared in Examples 14 to 18, which included citric acid 3Na, could remain in powder form under a high-temperature, high-humidity condition, even in the case where the proportion of citric acid 3Na in the coloring material powder was considerably high.

(Solubility in Water)

The solubility of each of the coloring material powders prepared in Examples 14 to 18 and Comparative examples 22 to 27 in water was determined.

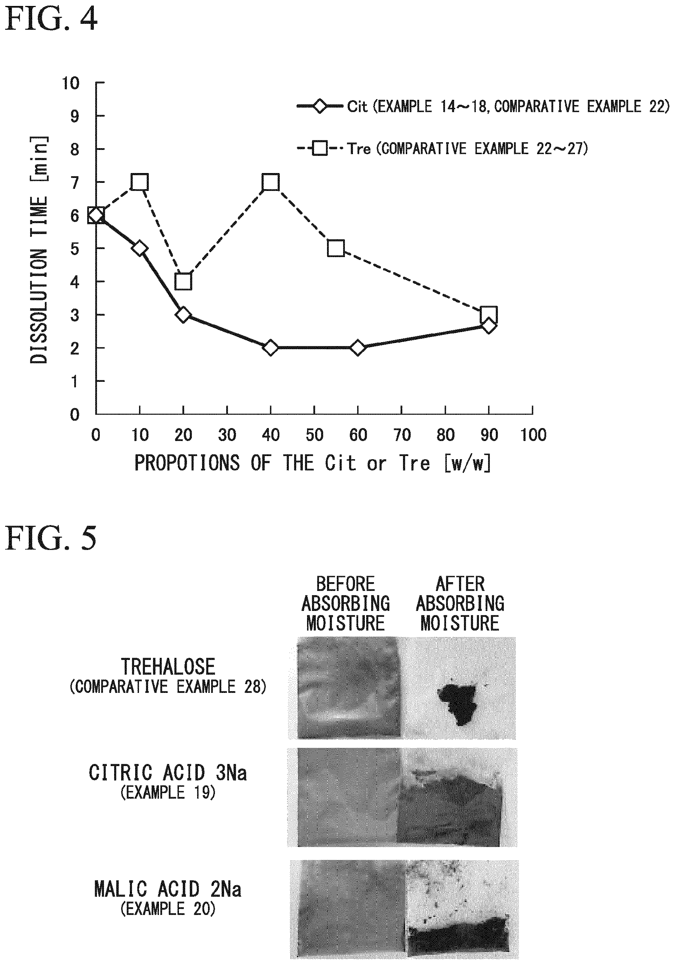

Tables 6 and 7 and Fig. 4 show the results. Fig. 4 is a graph illustrating the dissolution times of the coloring material powders prepared in Examples 14 to 18 and Comparative examples 22 to 27.

The coloring material powders prepared in Examples 14 to 18 had a shorter dissolution time and higher solubility in water than the coloring material powders prepared in Comparative examples 22 to 27, which included trehalose, regardless of the content of the citric acid 3Na which ranged from 10% to 90% (w/w).

<Study of Moisture Absorptivity and Chelating Agent>

[Comparative Example 28 and Examples 19 and 20]

The spirulina pigment, trehalose, and a chelating agent were dissolved in water such that the proportions of the spirulina pigment, the trehalose, and the chelating agent were as described in Table 8. The resulting solution was freeze-dried to form a powder. Hereby, coloring material powders of Comparative example 28 and Examples 19 and 20 were prepared.

[Table 8]

| | Spirulina pigment | Trehalose | Citric acid 3Na | Malic acid 2Na |
|---|---|---|---|---|
| Comparative example 28 | 40 | 55 | 5 | - |
| Example 19 | 40 | - | 60 | - |
| Example 20 | 40 | - | - | 60 |
| Note: In the above table, all values are in % (w/w). | | | | |

(Moisture Absorptivity)

The moisture absorptivity of each of the coloring material powders prepared in Comparative example 28 and Examples 19 and 20 was determined.

Fig. 5 shows the results. Fig. 5 includes photographs illustrating the states of the coloring material powders prepared in Comparative example 28 and Examples 19 and 20 that had not yet absorbed moisture and that had absorbed moisture. The coloring material powders prepared in Examples 19 and 20 remained in powder form as they were before absorbing moisture, even after absorbing moisture for 2 hours. In contrast, the coloring material powder prepared in Comparative example 28 entirely formed lumps after absorbing moisture for 2 hours. That is, the coloring material powder prepared in Comparative example 28 did not remain in powder form.

The above results confirm that the coloring material powders prepared in Examples 19 and 20, which included a chelating agent (i.e., citric acid 3Na or malic acid 2Na), had higher resistance to moisture absorption than the coloring material powder of Comparative example 28, which included trehalose. Accordingly, it is easy to maintain the coloring material powders prepared in Examples 19 and 20 in powder form and the coloring material powders prepared in Examples 19 and 20 are easy to handle. It was confirmed that the coloring material powders prepared in Examples 19 and 20 had excellent preservability under a high-temperature, high-humidity condition.

## Claims

1. A coloring material comprising a protein-based pigment and a chelating agent,
   the protein-based pigment including a phycobiliprotein, the content of the protein-based pigment in the coloring material being 1% by mass or more and 70 % by mass or
   less, the content of the chelating agent in the coloring material being 30% by mass or more and 99% by mass or less, with the content of solid components in the coloring material being 100% by mass,
   wherein the content of water in the coloring material is 15% by mass or less,
   the coloring material is a powder, and
   the chelating agent includes at least one compound selected from the group consisting of citric acid, malic acid, ethylenediaminetetraacetic acid, and salts of citric acid, malic acid, and ethylenediaminetetraacetic acid.

2. The coloring material according to Claim 1, wherein the phycobiliprotein includes phycocyanin.

3. The coloring material according to Claim 1, wherein the total content of the protein-based pigment and the chelating agent in the coloring material is 60% by mass or more and 100% by mass or less with the content of solid components in the coloring material being 100% by mass.

4. The coloring material according to Claim 1, wherein the content of trehalose in the coloring material is 20% by mass or less with the content of solid components in the coloring material being 100% by mass.

5. A method for producing a coloring material according to Claim 1,
   the method comprising a drying step in which a pigment composition including the protein-based pigment, the chelating agent, and a solvent is dried.

6. The method for producing the coloring material according to Claim 5, wherein the drying is performed by spray drying.

7. Use of the coloring material according to Claim 1 in the preparation of a food, a drink, a medicine or a cosmetic.

## Patentansprüche

1. Färbematerial, umfassend ein Pigment auf Proteinbasis und einen Chelatbildner,
   wobei das Pigment auf Proteinbasis ein Phycobiliprotein enthält,
   wobei der Gehalt des Pigments auf Proteinbasis in dem Färbematerial 1 Masse-% oder mehr und 70 Masse-% oder weniger beträgt, der Gehalt des Chelatbildners in dem Färbematerial 30 Masse-% oder mehr und 99 Masse-% oder weniger beträgt, wobei der Gehalt an festen Komponenten in dem Färbematerial 100 Masse-% beträgt,
   wobei der Wassergehalt in dem Färbematerial 15 Masse-% oder weniger beträgt,
   wobei das Färbematerial ein Pulver ist, und
   der Chelatbildner mindestens eine Verbindung enthält, ausgewählt aus der Gruppe, bestehend aus Citronensäure, Äpfelsäure, Ethylendiamintetraessigsäure und Salzen von Citronensäure, Äpfelsäure und Ethylendiamintetraessigsäure.

2.  Färbematerial nach Anspruch 1, wobei das Phycobiliprotein Phycocyanin enthält.

3.  Färbematerial nach Anspruch 1, wobei der Gesamtgehalt des Pigments auf Proteinbasis und des Chelatbildners im Färbematerial 60 Masse-% oder mehr und 100 Masse-% oder weniger beträgt, wobei der Gehalt an festen Komponenten in dem Färbematerial 100 Masse-% beträgt.

4.  Färbematerial nach Anspruch 1, wobei der Gehalt an Trehalose in dem Färbematerial 20 Masse-% oder weniger beträgt, wobei der Gehalt an festen Komponenten in dem Färbematerial 100 Masse-% beträgt.

5.  Verfahren zur Herstellung eines Färbematerials nach Anspruch 1,
    wobei das Verfahren einen Trocknungsschritt umfasst, in dem eine Pigmentzusammensetzung, die das Pigment auf Proteinbasis, den Chelatbildner und ein Lösungsmittel enthält, getrocknet wird.

6.  Verfahren zur Herstellung des Färbematerials nach Anspruch 5, wobei die Trocknung durch Sprühtrocknung durchgeführt wird.

7.  Verwendung des Färbematerials nach Anspruch 1 bei der Herstellung eines Lebensmittels, eines Getränks, eines Medikaments oder eines Kosmetikums.


**Revendications**

1.  Matière colorante comprenant un pigment à base de protéines et un agent chélatant,
    le pigment à base de protéines incluant une phycobiliprotéine,
    la teneur en pigment à base de protéines dans la matière colorante étant de 1 % en masse ou plus et de 70 % en masse ou moins, la teneur en agent chélatant dans la matière colorante étant de 30 % en masse ou plus et de 99 % en masse ou moins, la teneur en composants solides dans la matière colorante étant de 100 % en masse,
    dans laquelle la teneur en eau dans la matière colorante est de 15 % en masse ou moins,
    la matière colorante est une poudre, et
    l'agent chélatant inclut au moins un composé sélectionné à partir du groupe constitué par l'acide citrique, l'acide malique, l'acide éthylènediaminetétraacétique et les sels d'acide citrique, d'acide malique et d'acide éthylènediaminetétraacétique.

2.  Matière colorante selon la revendication 1, dans laquelle la phycobiliprotéine inclut de la phycocyanine.

3.  Matière colorante selon la revendication 1, dans laquelle la teneur totale en pigment à base de protéines et en agent chélatant dans la matière colorante est de 60 % en masse ou plus et de 100 % en masse ou moins, la teneur en composants solides dans la matière colorante étant de 100 % en masse.

4.  Matière colorante selon la revendication 1, dans laquelle la teneur en tréhalose dans la matière colorante est de 20 % en masse ou moins, la teneur en composants solides dans la matière colorante étant de 100 % en masse.

5.  Procédé de production d'une matière colorante selon la revendication 1,
    le procédé comprenant une étape de séchage dans laquelle une composition de pigment incluant le pigment à base de protéines, l'agent chélatant et un solvant est séchée.

6.  Procédé de production de la matière colorante selon la revendication 5, dans lequel le séchage est réalisé par séchage par pulvérisation.

7.  Utilisation de la matière colorante selon la revendication 1 dans la préparation d'un aliment, d'une boisson, d'un médicament ou d'un cosmétique.

# FIG. 1

EXAMPLE 1

0 HOUR                    2 HOURS

COMPARATIVE EXAMPLE 1

0 HOUR                    2 HOURS

# FIG. 2

# FIG. 3

## FIG. 4

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014371433 A1
- JP S626691 A
- JP 2006230272 A
- JP 3256318 B
- JP 11299450 A
- JP 52134058 A

**Non-patent literature cited in the description**

- **YOSHIKAWA, N ; BELAY, A.** Single-laboratory validation of a method for the determination of c-phycocyanin and allophycocyanin in spirulina (arthrospira) supplements and raw materials by spectrophotometry. *Journal of Aoac International,* 2008, vol. 91, 524-529
- Color Value Test'' of Japan's Specifications and Standards for Food Additives. The Ministry of Health